# EUROPEAN PATENT APPLICATION

(11) **EP 4 714 669 A1**
(43) Date of publication of application: **25.03.2026**
(21) Application number: 25203406.1
(22) Date of filing: 19.09.2025
(51) Int. Cl.: B60B 33/00, A61H 3/04

(54) **A WHEEL ASSEMBLY**

(30) Priority: 24.09.2024 PL 44988624
(71) Applicant: LIW Care Technology Sp. z o.o., 94-406 Lodz (PL)
(72) Inventor: PIATEK, Grzegorz, 94-406 Lodz (PL)
(74) Representative: Kancelaria Eupatent.pl Sp. z o.o.

(57) **Abstract**

A wheel assembly for mounting to a supporting structure, comprising a running wheel with an axle, a resistance mechanism mounted on the axle for increasing the resistance to the rotational movement of the running wheel, characterised in that it further comprises a blocking mechanism (50) for temporarily blocking the rotational movement of the running wheel (10) in one direction, the blocking mechanism (50) comprising a one-way bearing (51) mounted on the axle (30) and a blocking element (55) for blocking the movement of an outer race (51A) of the one-way bearing (51) relative to the supporting structure (1), wherein the blocking element (55) is movable between a retracted position, in which the movement of the outer race (51A) relative to the supporting structure (1) is possible, and a closed position, in which the movement of the outer race (51A) relative to the supporting structure (1) is blocked.

## Description

### TECHNICAL FIELD

The present disclosure relates to a wheel assembly, intended in particular for rollators or rehabilitation walkers.

### BACKGROUND

Rehabilitation rollators and walkers are devices supporting the mobility of persons with reduced motor function. For example, rehabilitation rollators may be used by persons, particularly children, with various neurological disorders such as cerebral palsy, muscular dystrophy, or other motor impairments. They allow children to achieve greater independence in mobility, support the rehabilitation process, and help improve coordination and balance. By using rollators, children can participate in everyday activities, develop motor skills, and build self-confidence, which is essential for their development and social integration. Moreover, rehabilitation rollators may be used in the rehabilitation process following orthopaedic surgeries (e.g. hip or knee arthroplasty), bone fractures, or leg injuries, supporting the return to full mobility by providing stability and support during walking.

A rehabilitation rollator comprises a frame with handles that provide the user with stable support. At the lower part of the frame, there are running wheels enabling movement of the rollator. The running wheels may comprise a mechanism for adjusting rolling resistance, which makes it possible to adapt the force required to move the rollator across a surface, to the individual needs of the user. The rehabilitation rollator may be equipped with a brake mechanism for blocking rotation of the wheels in one direction. Typically, such a mechanism is an additional tilting element in the form of a cam, located above the axle of the front wheels, which contacts the outer surface of the wheel, thereby blocking backward movement of the rollator.

It would be desirable to provide an alternative design of a wheel assembly with an integrated resistance mechanism and a blocking mechanism.

### SUMMARY OF THE INVENTION

In one aspect, the invention relates to a wheel assembly intended for mounting to a supporting structure, comprising a running wheel with an axle, a resistance mechanism mounted on the axle for increasing the resistance to the rotational movement of the running wheel. The wheel assembly is characterised in that it further comprises a blocking mechanism for temporarily blocking the rotational movement of the running wheel in one direction, the blocking mechanism comprising a one-way bearing mounted on the axle and a blocking element for blocking the movement of the outer race of the one-way bearing relative to the supporting structure, wherein the blocking element is movable between a retracted position, in which the movement of the outer race relative to the supporting structure is possible, and a closed position, in which the movement of the outer race relative to the supporting structure is blocked.

The wheel assembly with an integrated resistance mechanism and blocking mechanism has a compact design and has low susceptibility to damage or wear. This improves user safety. In particular, the blocking mechanism prevents uncontrolled backward movement of the rollator, thereby minimising the risk of falls and injuries.

Preferably, the resistance mechanism comprises at least one elastic element and a knob screwed onto the axle for compressing the at least one elastic element between the running wheel and the supporting structure. This enables the rolling resistance to be adjusted to the individual needs of the user, increasing comfort and rehabilitation efficiency. The knob allows easy adjustment of resistance without the need for tools.

Preferably, the resistance mechanism further comprises a brake housing with a recess, and a friction disc having projections on its circumference located in grooves in the recess of the brake housing, wherein at least one elastic element is arranged between the brake housing and the friction disc. Owing to this design, the resistance mechanism provides uniform rolling resistance.

Preferably, the elastic element has a form of a disc spring. Disc springs allow for precise resistance force regulation and are less prone to wear.

Preferably, the blocking mechanism further comprises a bearing housing of the one-way bearing mounted on an outer race of the one-way bearing, and a blocking disc attached to the bearing housing and having at least one recess, wherein the blocking element is attached to the supporting structure and cooperates with the at least one recess of the blocking disc. The blocking disc with recesses cooperating with the blocking element ensures precise and reliable blocking of the running wheel in one rotational direction, usually in the backward direction. Each time the direction changes to the backward direction, the running wheel is immediately locked.

Preferably, the wheel assembly further comprises a hub having a cylindrical projection on one side and a flange on the other side, wherein the one-way bearing is press-fitted onto the cylindrical projection and the running wheel is fixed to the flange. The hub with the cylindrical projection and flange ensures stable mounting of the running wheel.

### BRIEF DESCRIPTION OF THE DRAWINGS

The present invention is shown by means of preferable embodiments in a drawing, wherein:
Fig. 1 shows a wheel assembly in an isometric rear view;
Fig. 2 shows the wheel assembly in an isometric front view;
Fig. 3 shows the wheel assembly in a front view;
Fig. 4 shows the wheel assembly in cross-section A-A of Fig. 3;
Fig. 5 shows the wheel assembly in an exploded view;
Fig. 6 shows an exemplary rehabilitation rollator with the wheel assembly;
Fig. 7 shows an axle of the running wheel;
Fig. 8 shows part of the wheel assembly with the hub in an isometric rear view;
Fig. 9 shows part of the wheel assembly with the hub in an isometric front view;
Fig. 10 shows part of the wheel assembly with the brake housing in an isometric front view.

### DETAILED DESCRIPTION

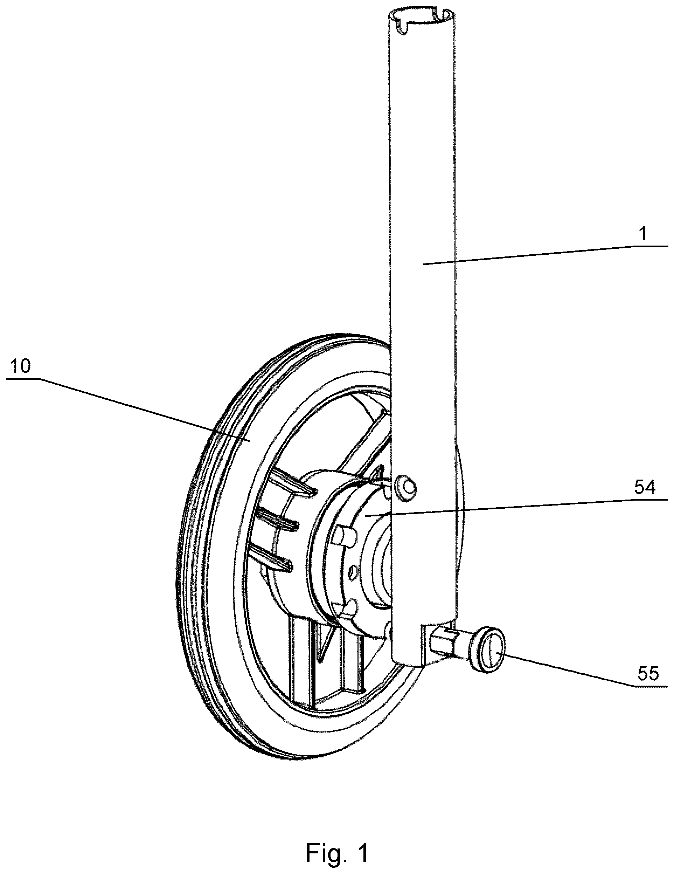

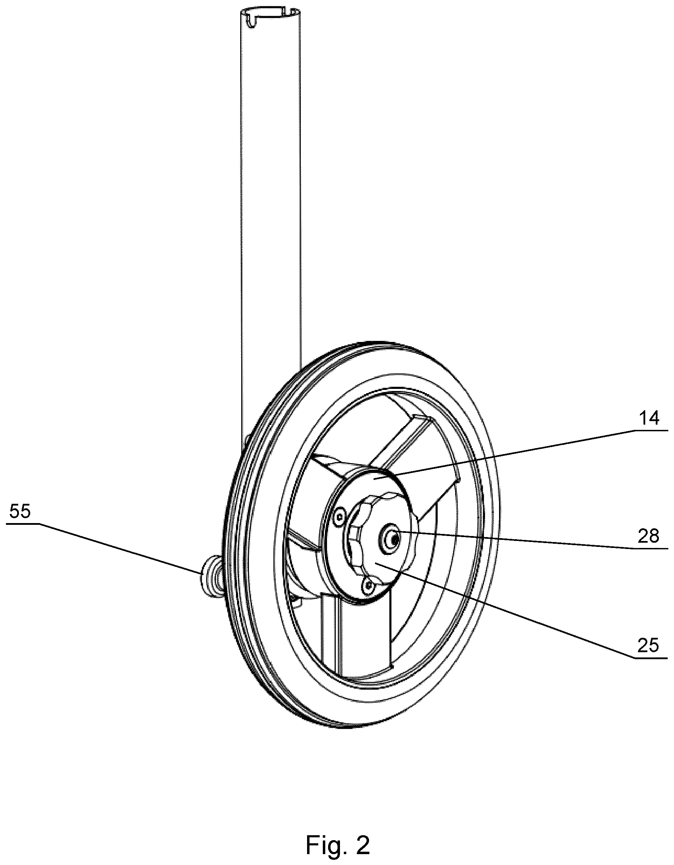

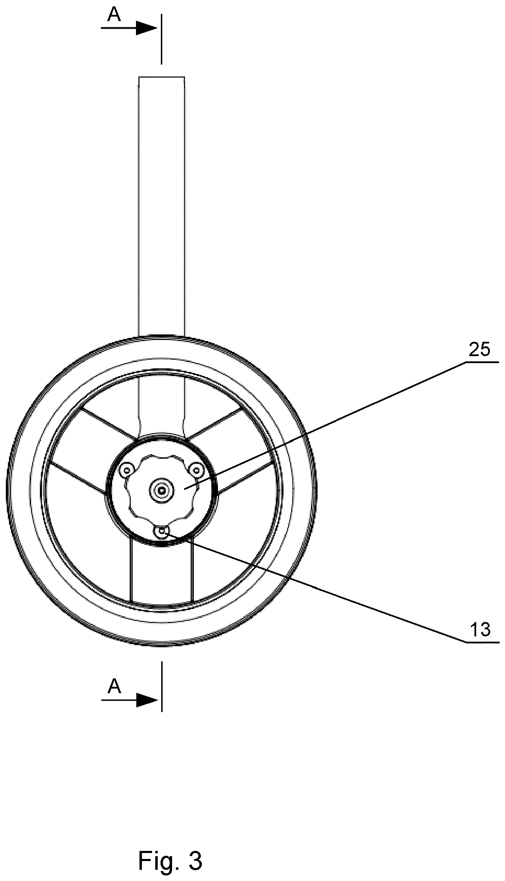

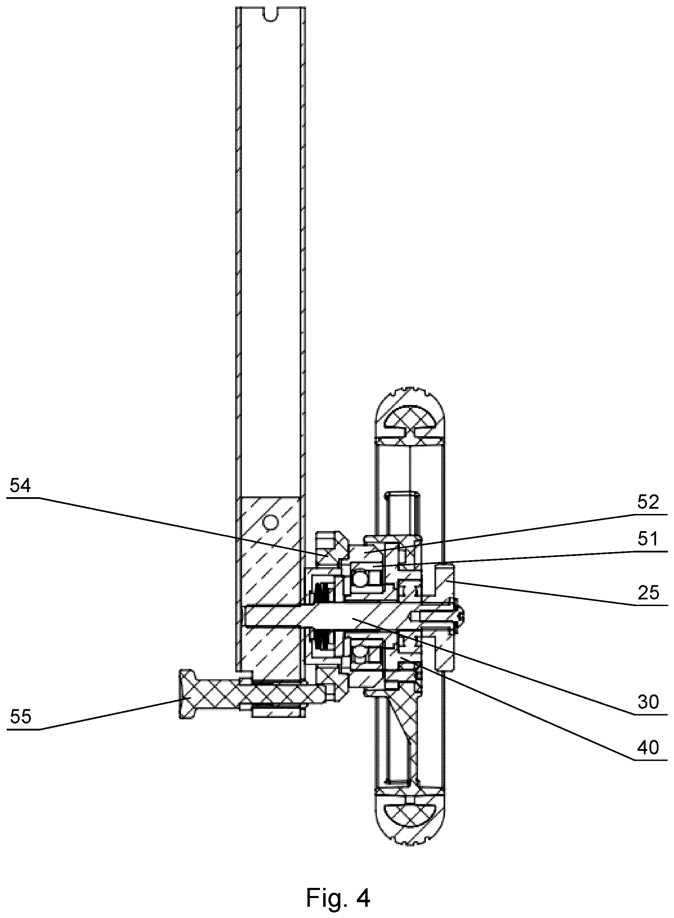

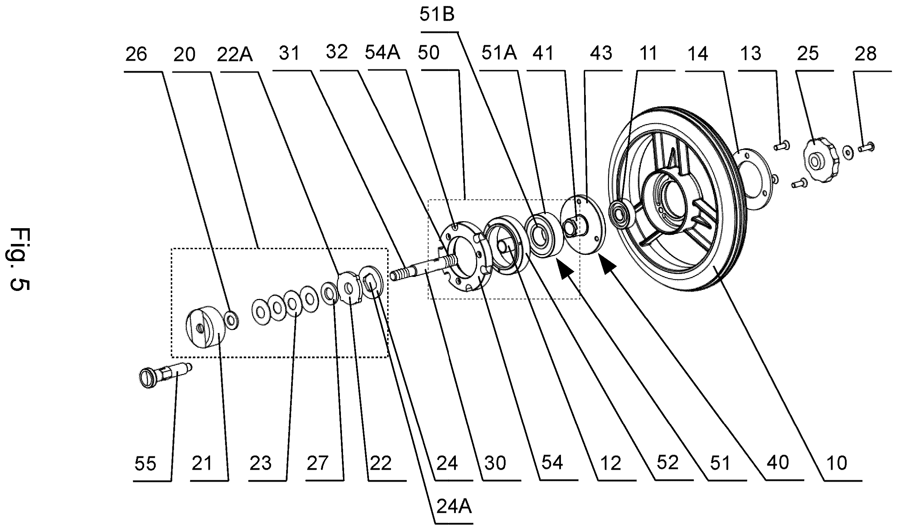

Figs. 1-4 show a wheel assembly with part of a supporting structure. Fig. 5 shows the wheel assembly in an exploded view. The wheel assembly, intended for mounting to a supporting structure, comprises a running wheel 10 with an axle 30, which may also be referred to as a main axle, a resistance mechanism 20 mounted on the axle 30 for increasing the resistance to the rotational movement of the running wheel 10, and a blocking mechanism 50 for temporarily blocking the rotational movement of the running wheel 10 in one direction. The blocking mechanism 50 comprises a one-way bearing 51 mounted on the axle 30 and a blocking element 55 for blocking the movement of an outer race 51A of the one-way bearing 51 relative to the supporting structure 1, wherein the blocking element 55 is movable between a retracted position, in which the movement of the outer race 51A relative to the supporting structure 1 is possible, and a closed position, in which the movement of the outer race 51A relative to the supporting structure 1 is blocked. The blocking element 55 is attached to the supporting structure 1.

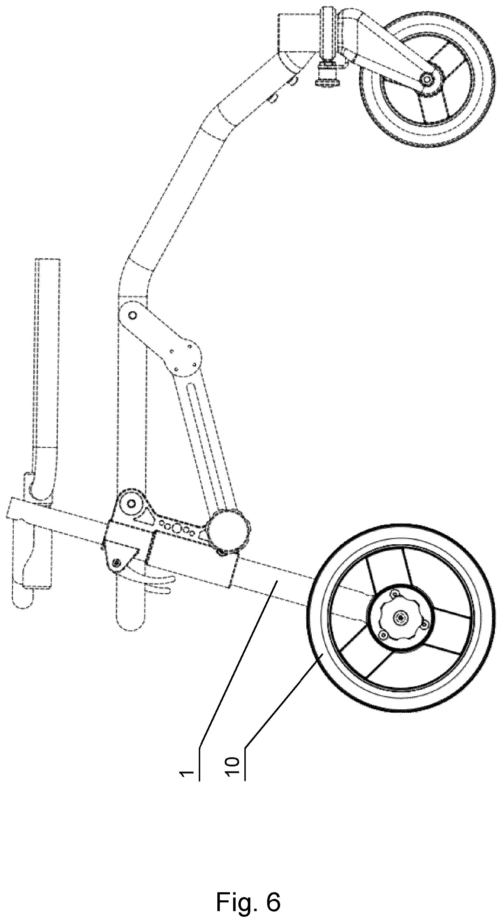

Fig. 6 shows an exemplary rehabilitation rollator with the wheel assembly. The wheel assembly is intended for mounting to the supporting structures of such devices as rehabilitation rollators, rehabilitation walkers, etc.

The resistance mechanism 20, in an adjustable manner, limits the free rotation of the running wheel 10, and thus the free movement of the rehabilitation rollator in both directions. This prevents the rollator from gaining excessive speed. The rolling resistance of the rollator may be adjusted to the rehabilitation needs of the user.

The blocking mechanism 50, by blocking the movement of the outer race 51A of the one-way bearing 51 relative to the supporting structure 1, enables temporary blocking of the rotational movement of the running wheel 10 in the backward direction. This prevents uncontrolled rollback of the rollator, thereby reducing the risk of falls and injuries. This is particularly important for persons with limited muscle strength. The expression "temporary" should be understood to mean that the blocking mechanism 50 may be activated (turned on) or deactivated (turned off) by the user. While activated, the movement of the running wheel 10 in the backward direction is blocked. While deactivated, the movement of the running wheel 10 in the backward direction is possible.

Preferably, the resistance mechanism 20 comprises at least one elastic element 23 and a knob 25 screwed onto the axle 30 for compressing the at least one elastic element 23 between the running wheel 10 and the supporting structure 1.

The axle 30 has a first external thread 31 on one side for mounting the axle to the supporting structure 1 and a second external thread 32 on the other side, onto which the knob 25 is screwed.

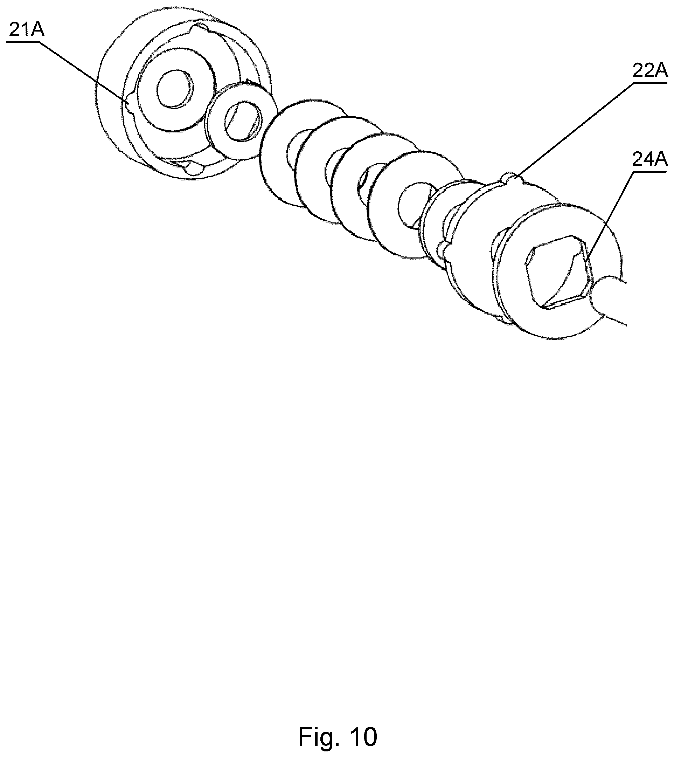

Preferably, the resistance mechanism 20 further comprises a brake housing 21 with a recess and a friction disc 22 having circumferential projections 22A located in grooves 21A of the recess of the brake housing 21, wherein at least one elastic element 23 is arranged between the brake housing 21 and the friction disc 22. The recess of the brake housing 21 with grooves 21A is shown in Fig. 10.

The brake housing 21 is screwed onto the first external thread 31 of the axle 30. The friction disc 22 has projections 22A, which positioned in the grooves 21A of the brake housing 21, prevent the friction disc 22 from rotating.

Adjustment of the rotational resistance of the running wheel 10 (in both directions) takes place by adjusting the knob 25 (by rotating the knob either left or right). Tightening the knob 25 presses the pressure plate 24 against the friction disc 22 and compresses the elastic element 23. The tighter the knob 25 is screwed, the greater the force is required to move the rollator. As a result the rotational resistance may be fluently adjusted between 0 to 100 %, wherein when the knob 25 is completely loosened the rotational resistance force is equal to 0 - the resistance mechanism 20 is turned off and it doesn't resist the rotation of the running wheel 10. On the other hand, when the knob 25 is fully tightened the rotation of the running wheel 10 is blocked in both directions - forward and backward. When the running wheel 10 is blocked in both directions the rollator may be used as a support for performing stationary exercises.

Preferably, the blocking mechanism 50 further comprises a bearing housing 52 of the one-way bearing 51 mounted on the outer race 51A of the one-way bearing 51 and a blocking disc 54 attached to the bearing housing 52, wherein the blocking disc 54 has at least one recess 54A and wherein the blocking element 55 is attached to the supporting structure 1 and cooperates with the at least one recess 54A of the blocking disc 54. Preferably, the blocking disc 54 has six recesses 54A.

Preferably, the blocking disc 54 is press-fitted and additionally screwed onto the bearing housing 52.

The blocking element 55 is movable between a retracted position, in which a projection (for example in the form of a pin or a stud) of the blocking element 55 is spaced from the recess 54A and the movement of the outer race 51A relative to the supporting structure 1 is possible, and a closed position, in which the projection of the blocking element 55 is located in the recess 54A and the movement of the outer race 51A relative to the supporting structure 1 is blocked. In addition, the blocking element 55 may be locked in the retracted position. For example, the blocking element 55 may be in the form of a detent pin or a spring-loaded latch, in which, by rotating the latch head relative to its body (for example by 90 degrees), the blocking element 55 may be locked in the retracted position. When the head is returned to its default position, the spring causes the blocking element 55 to return to the closed position, in which the projection is extended and abuts against the blocking disc 54. In order to block the rotational movement of the running wheel 10 in one direction, the wheel must be rotated until the projection of the blocking element 55 encounters the recess 54A and automatically engages in it. Thereafter, each time the direction changes from forward to backward, the rotational movement of the running wheel 10 is immediately blocked.

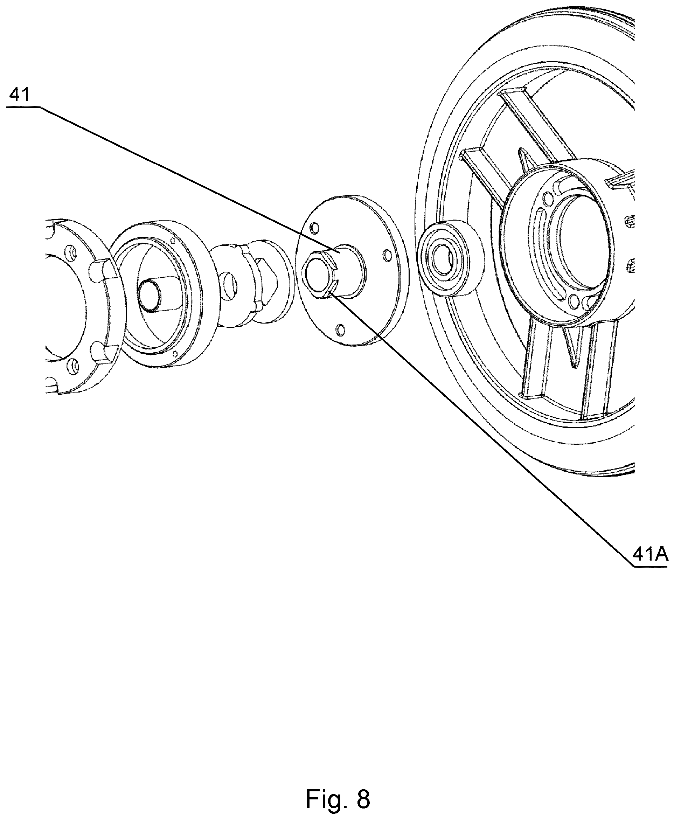

Preferably, the wheel assembly comprises a hub 40 having a cylindrical projection 41 (Fig. 8) on one side and a flange 43 on the other side, wherein the one-way bearing 51 is press-fitted onto the cylindrical projection 41. The outer diameter of the cylindrical projection 41 is smaller than the outer diameter of the flange 43.

The cylindrical projection 41 of the hub 40 forms an axle for an inner race 51B of the one-way bearing 51. The one-way bearing 51 is press-fitted onto the cylindrical projection 41 of the hub 40 and into the bearing housing 52.

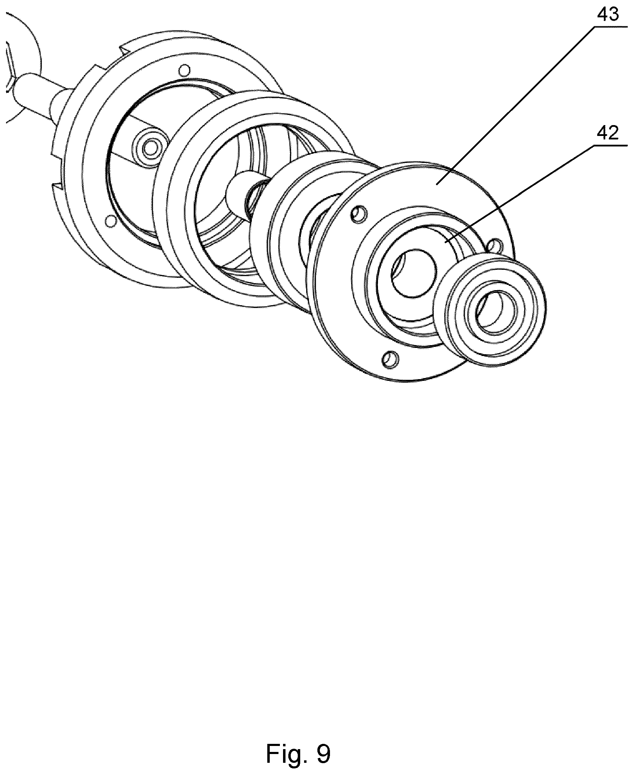

Fig. 9 shows the hub in an isometric front view. Preferably, the hub 40, on the side of the flange 43, comprises a cylindrical recess 42 in which a support bearing 11 is press-fitted. The support bearing 11, fitted on the axle 30, supports the hub 40.

Preferably, for greater stability, the hub 40 is supported on the side of the resistance mechanism 20 by means of a sliding bushing 12. The running wheel 10 is slidably fitted onto the flange 43 of the hub 40 and fastened thereto with screws 13 via a pressure cap 14.

Preferably, the resistance mechanism 20 comprises a pressure plate 24 arranged between the friction disc 22 and the knob 25. Preferably, the pressure plate 24 has a square inner opening 24A, and the cylindrical projection 41 of the hub 40 has undercuts 41A (Fig. 8), which accommodate the pressure plate 24. This prevents rotational movement of the pressure plate 24 relative to the hub 40.

For example, the elastic element 23 may have a form of an elastomeric disc or a spring element, for example a disc spring. Preferably, the resistance mechanism 20 comprises four disc springs 23.

The pressure plate 24, the sliding bushing 12, the hub 40, the support bearing 11, the running wheel 10, and the pressure cap 14 rotate together around the axle 30.

Preferably, a first washer 26 is arranged between the brake housing 21 and the first disc spring 23. Preferably, a second washer 27 is arranged between the last disc spring 23 and the friction disc 22.

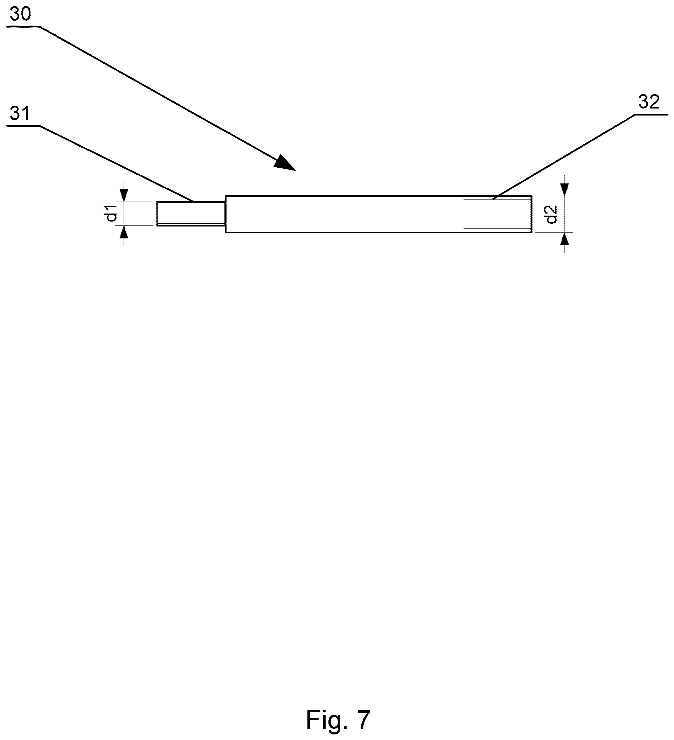

Fig. 7 shows the axle 30 in side view. Preferably, the axle 30 has a first portion with a diameter d1 and a second portion with a diameter d2 larger than the diameter d1. The first external thread 31 is located on the first portion, and the second external thread 32 is located on the second portion. The disc springs 23 and the friction disc 22 are located on the second portion with the diameter d2.

Preferably, on the side of the second external thread 32, the axle 30 comprises an internal thread into which a blocking screw 28 is screwed. The blocking screw 28 prevents the knob 25 from being completely unscrewed.

In an exemplary embodiment, the wheel assembly, intended for mounting to a supporting structure 1, comprises the axle 30, which has a first external thread 31 on one side and a second external thread 32 on the other side, and the hub 40, which has a cylindrical projection 41 on one side, a flange 43 and a cylindrical recess 42 on the other side. Wherein, the outer diameter of the cylindrical projection 41 is smaller than the outer diameter of the flange 43. The running wheel 10 is fixed to the flange 43, and a support bearing 11 is press-fitted into the cylindrical recess 42 of the hub 40 and fitted onto the axle 30. The wheel assembly further comprises the resistance mechanism 20 mounted on the axle 30 for increasing the resistance to the rotational movement of the running wheel 10. The resistance mechanism 20 comprises a brake housing 21 with a recess, screwed onto the first external thread 31, a friction disc 22 having circumferential projections 22A positioned in grooves 21A of the recess of the brake housing 21, at least one elastic element 23 located between the brake housing 21 and the friction disc 22, a pressure plate 24 located on the cylindrical projection 41 of the hub 40 between the friction disc 22 and the hub 40, and a knob 25 having an internal thread, screwed onto the second external thread 32 of the axle 30, for displacing the pressure plate 24 towards the brake housing 21 and for compressing the at least one elastic element 23 between the friction disc 22 and the brake housing 21. Wherein, the wheel assembly further comprises a blocking mechanism 50 for temporarily blocking the rotational movement of the running wheel 10 in one direction, comprising a one-way bearing 51 mounted on the cylindrical projection 41 of the hub 40, a bearing housing 52 of the one-way bearing 51 mounted on the outer race 51A of the one-way bearing 51, a blocking disc 54 attached to the bearing housing 52, wherein the blocking disc 54 has at least one recess 54A, and a blocking element 55 attached to the supporting structure and cooperating with the at least one recess 54A of the blocking disc 54 for blocking the movement of the outer race 51A of the one-way bearing 51 relative to the supporting structure 1.

The drawback of the previously used mechanisms for blocking the movement of the wheel (for example in rehabilitation rollators) in one direction, in which wheel movement is blocked by means of a cam resting against the outer edge of the running wheel, is that at each change of direction, the running wheel must rotate over a certain distance before the blocking mechanism is activated. This distance results from the need to tension the mechanism, which requires rotation of the wheel, for example by about 5 to 20 degrees.

The advantage of the presented wheel assembly with the blocking mechanism is that, once the blocking element is set to the locked position, the one-way movement of the running wheel is continuously blocked. This means that, for example, when changing the direction of movement of the rollator from forward to backward, the blocking mechanism immediately blocks backward movement of the wheel. There is no need for the wheel to rotate through an angle required to tension the mechanism - i.e. to allow a cam to engage the wheel.

Moreover, the presented solution provides a compact set of components arranged in a coaxial structure with the possibility of freely combining functions. In particular, by using the backward blocking functionality, each change of direction to the backward direction results in immediate blocking of the wheel assembly without the need for tensioning the mechanism and without the associated distance required for wheel blocking as in the case of using a cam.

## Claims

1. A wheel assembly for mounting to a supporting structure, comprising a running wheel with an axle, a resistance mechanism mounted on the axle for increasing the resistance to the rotational movement of the running wheel,
**characterised in that** it further comprises a blocking mechanism (50) for temporarily blocking the rotational movement of the running wheel (10) in one direction, the blocking mechanism (50) comprising a one-way bearing (51) mounted on the axle (30) and a blocking element (55) for blocking the movement of an outer race (51A) of the one-way bearing (51) relative to the supporting structure (1), wherein the blocking element (55) is movable between a retracted position, in which the movement of the outer race (51A) relative to the supporting structure (1) is possible, and a closed position, in which the movement of the outer race (51A) relative to the supporting structure (1) is blocked.

2. The wheel assembly according to claim 1, wherein the resistance mechanism (20) comprises at least one elastic element (23) and a knob (25) screwed onto the axle (30) for compressing the at least one elastic element (23) between the running wheel (10) and the supporting structure (1).

3. The wheel assembly according to claim 2, wherein the resistance mechanism (20) further comprises: a brake housing (21) with a recess; a friction disc (22) having projections (22A) on its circumference located in grooves (21A) in the recess of the brake housing (21), wherein the at least one elastic element (23) is arranged between the brake housing (21) and the friction disc (22).

4. The wheel assembly according to claim 2 or 3, wherein the elastic element (23) has a form of a disc spring.

5. The wheel assembly according to any of claims 1 to 4, wherein the blocking mechanism (50) further comprises a bearing housing (52) of the one-way bearing (51), mounted on the outer race (51A) of the one-way bearing (51), and a blocking disc (54) attached to the bearing housing (52), wherein the blocking disc (54) has at least one recess (54A), wherein the blocking element (55) is attached to the supporting structure and cooperates with the at least one recess (54A) of the blocking disc (54).

6. The wheel assembly according to any of claims 1 to 5, wherein it further comprises a hub (40) having a cylindrical projection (41) on one side and a flange (43) on the other side, wherein the one-way bearing (51) is press-fitted onto the cylindrical projection (41), and the running wheel is fixed to the flange (43).
